# EUROPÄISCHE PATENTSCHRIFT

(11) **EP 1 787 204 B1**
(45) Veröffentlichungstag und Bekanntmachung des Hinweises auf die Patenterteilung: **23.12.2009**
(21) Anmeldenummer: 05756827.1
(22) Anmeldetag: 29.06.2005
(51) Int. Cl.: G06F 13/16

(54) **BOTSCHAFTSVERWALTER UND VERFAHREN ZUR STEUERUNG DES ZUGRIFFS AUF DATEN EINES BOTSCHAFTSSPEICHERS EINES KOMMUNIKATIONSBAUSTEINS**
MESSAGE ADMINISTRATOR AND METHOD FOR CONTROLLING ACCESS TO DATA OF THE MESSAGE MEMORY OF A COMMUNICATIONS COMPONENT
GESTIONNAIRE DE MESSAGES ET PROCEDE POUR COMMANDER L'ACCES A DES DONNEES D'UNE MEMOIRE DE MESSAGES D'UN MODULE DE COMMUNICATION

(30) Priorität: 05.08.2004 DE 102004038211
(43) Veröffentlichungstag der Anmeldung: 23.05.2007
(73) Patentinhaber: Robert Bosch GmbH, 70442 Stuttgart (DE)
(72) Erfinder: HARTWICH, Florian, 72762 Reutlingen (DE); HORST, Christian, 72144 Dusslingen (DE); BAILER, Franz, 72770 Reutlingen (DE); IHLE, Markus, 72127 Jettenburg (DE)
(86) Internationale Anmeldenummer: PCT/EP2005/053074
(87) Internationale Veröffentlichungsnummer: WO 2006/015910

(56) Entgegenhaltungen:
- US-A- 5 471 588
- US-A- 5 765 036
- US-A- 5 983 327

## Beschreibung

### Stand der Technik

Die Erfindung geht aus von einem Botschaflsverwalter und einem Verfahren zur Steuerung des Zugriffs auf Daten eines Botschaftsspeichers eines Kommunikationsbausteins gemäß den Oberbegriffen der unabhängigen Ansprüche.

Die Vernetzung von Steuergeräten, Sensorik und Aktuatorik mit Hilfe eines Kommunikationssystems und eines Bussystems, also einer Kommunikationsverbindung hat in den letzten Jahren beim Bau von modernen Kraftfahrzeugen oder auch im Maschinenbau, insbesondere im Werkzeugmaschinenbereich also auch in der Automatisierung, drastisch zugenommen. Synergieeffekte durch Verteilung von Funktionen auf mehrere Steuergeräte können dabei erzielt werden. Man spricht hierbei von verteilten Systemen. Die Kommunikation zwischen verschiedenen Stationen findet mehr und mehr über ein Bussystem, also ein Kommunikationssystem statt. Der Kommunikalionsverkehr auf dem Bussystem, Zugriffs- und Empfangsmechanismen sowie Fehlerbehandlung werden über ein Protokoll geregelt Ein bekanntes Protokoll hierzu ist das CAN-Protokoll oder auch das TTCAN-Protokoll sowie das FlexRay-Protokoll, wobei im Augenblick die FlexRay-Protokollspezifiktaion V2.0 zugrunde liegt. Der FlexRay ist dabei ein schnelles, deterministisches und fehlertolerantes Bussystem, insbesondere für den Einsatz in einem Kraftfahrzeug. Das FlexRay-Protokoll arbeitet nach dem Verfahren des Time-Division-Multiple-Access (TDMA), wobei den Komponenten, also Teilnehmern bzw. den zu übertragenden Botschaften feste Zeitschlitze zugewiesen werden, in denen sie ein exklusiven Zugriff auf die Kommunikationsverbindung haben. Vergleichbar wird dies auch beim TTCAN umgesetzt. Die Zeitschlitze wiederholen sich dabei in einem festgelegten Zyklus, sodass der Zeitpunkt, zu dem eine Botschaft über den Bus übertragen wird, exakt vorausgesagt werden kann und der Buszugriff deterministisch erfolgt. Um die Bandbreite für die Botschaftsübertragung auf dem Bussystem optimal zu nutzen unterteilt der FlexRay den Zyklus in einen statischen und einen dynamischen Teil. Die festen Zeitschlitze befinden sich dabei im statischen Teil am Anfang eines Buszyklussees. Im dynamischen Teil werden die Zeitschlitze dynamisch vergeben. Darin wird nun der exklusive Buszugriff jeweils nur für eine kurze Zeit, sogenannte Minislots, ermöglicht. Nur wenn innerhalb eines Minislots ein Buszugriff erfolgt, wird der Zeitschlitz um die benötigte Zeit verlängert. Damit wird Bandbreite also nur verbraucht, wenn sie auch tatsächlich benötigt wird. Dabei kommuniziert FlexRay über zwei physikalisch getrennte Leitungen mit einer Datenrate von je maximal 10MB pro Sekunde. Die beiden Kanäle entsprechen dabei der physikalischen Schicht, insbesondere des OSI (Open System Architecture) Schichtenmodells. Diese dienen nun hauptsächlich der redundanten und damit fehlertoleranten Übertragung von Botschaften, können jedoch auch unterschiedliche Botschaften übertragen, wodurch sich dann die Datenrate verdoppeln würde. FlexRay kann aber auch mit niedrigeren Datenraten betrieben werden.

Um synchrone Funktionen zu realisieren und die Bandbreite durch kleine Abstände zwischen zwei Botschaften zu optimieren, benötigen die verteilten Komponenten im Kommunikationsnetzwerk, also die Teilnehmer, eine gemeinsame Zeitbasis, die sogenannte globale Zeit. Für die Uhrensynchronisation werden Synchronisationsnachrichten im statischen Teil des Zyklus übertragen, wobei mit Hilfe eines speziellen Algorhytmus entsprechend der FlexRaySpezifikation die lokale Uhrzeit einer Komponente so korrigiert wird, dass alle lokalen Uhren zu einer globalen Uhr synchron laufen. Diese Synchronisation erfolgt vergleichbar auch in einem TTCAN-Netzwerk.

Ein FlexRay-Netzknoten oder FlexRay-Teilnehmer oder Host enthält einen Teilnehmerprozessor, also den Hostprozessor, einen FlexRay-Controller oder Kommunikationscontroller sowie bei einer Busüberwachung einen Busguardian. Dabei liefert und verarbeitet des Host-Prozessor, also der Teilnehmerprozessor die Daten, die über den FlexRay-Kommunikationscontroller übertragen werden. Für die Kommunikation in einem FlexRay Netzwerk können Botschaften bzw. Botschaftsobjekte mit z. B. bis zu 254 Datenbytes konfiguriert werden. Um nun diese Botschaften bzw. Botschaftsobjekte zwischen physikalischer Schicht also der Kommunikationsverbindung und dem Host-Prozessor zu übertragen, wird ein Kommunikationsbaustein, insbesondere ein Kommunikationscontroller, eingesetzt.

Das Dokument US5983327 offenbart ein Arbitrierungsverfahren bei dem gleichzeitige Zugriffe verschiedener Komponenten auf einen gemeinsamen Speicher ineinander verschachtelt abgearbeitet werden, so dass Datenworte der konkurrierenden Zugriffe abwechselnd übertragen werden.

Aufgabe der Erfindung ist es nun, die Datenübertragung so zu steuern, dass die Datenintegrität sichergestellt ist und die Übertragungsgeschwindigkeit optimiert wird.

### Vorteile der Erfindung

Die Erfindung geht aus von einem Kommunikationsbaustein gemäß Anspruch 1 und einem Verfahren gemäß Anspruch 3.

D. h. die Erfindung beschreibt ein Verfahren und eine Vorrichtung für den Datentransfer zwischen einem Botschaftsspeicher, also einem Message-RAM, und Eingangs- und Ausgangspuffern sowie zwischen Botschaftsspeicher und den Sende- und Empfangseinheiten zum Kommunikationsbus so zu steuern, dass die geforderte Datenintegrität und die hohe Übertragungsgeschwindigkeit der zu speichernden Botschaften sichergestellt ist.

Zweckmäßigerweise werden die Daten gesteuert durch den Botschaftsverwalter über die erste Pufferspeicheranordnung in zwei Datenpfaden mit jeweils zwei Datenrichtungen übertragen wobei die erste Pufferspeicheranordnung einen ersten Pufferspeicher für einen ersten Datenpfad und einen zweiten Pufferspeicher für einen zweiten Datenpfad enthält und die Datenpfade jeweils eine erste Zustandsmaschine oder Finite State Maschine vorgesehen ist, sodass sich zwei Zustandsmaschinen für die erste Pufferspeicheranordnung ergeben wobei jede der beiden ersten Zustandsmaschinen oder Finite State Maschinen den Zugriff auf den Botschaftsspeicher über je einen Pufferspeicher steuert.

Zweckmäßigerweise sind Taktmittel vorgesehen, durch welche die Daten in einer vorgebbaren Taktperiode übertagen werden, wobei die dritte Zustandsmaschine oder Finite State Maschine jeder ersten Finite State Maschine und jeder zweiten Finite State Maschine abhängig von deren Zugriffsanforderungen nacheinander entsprechend Taktperioden zuteilt.

Vorteilhafterweise wird die gesamte Zugriffszeit abhängig von einer Anzahl gleichzeitiger Zugriffsanforderungen gleichmäßig entsprechend der Anzahl durch die dritte Finite State Maschine oder Zustandsmaschine aufgeteilt, wobei pro Finite State Maschine, also Zustandsmaschine, auf die die Taktperioden aufgeteilt werden, gleichzeitig immer nur eine Zugriffsanforderung zulässig ist.

Das beschriebene Verfahren und der beschriebene Botschaftsverwalter sowie ein entsprechender Kommunikationsbaustein mit einem solchen Botschaftsverwalter ermöglicht es der Host-CPU im laufenden Betrieb jedes beliebige Botschaftsobjekt, also jede beliebige Botschaft im Botschaftsspeicher zu lesen oder zu schreiben ohne dass das ausgewählte Botschattsobjekt für die Dauer des Zugriffs der Host-CPU von der Teilnahme am Datenaustausch auf den beiden Kanälen beispielsweise eines FlexRay-Busses, also des Datenaustauschs auf dem Physical Layer gesperrt wäre. Gleichzeitig wird durch die taktweise Verschachtelung der Zugriffe die Integrität der im Botschaftsspeicher abgelegten Daten sichergestellt und eine hohe Übertragungsrate gewährleistet.

Weiter Vorteile und vorteilhafte Ausgestaltungen ergeben sich aus der Beschreibung sowie den Merkmalen der Ansprüche.

### Zeichnung

Die Erfindung wird anhand der nachfolgenden Figuren der Zeichnung näher erläutert.

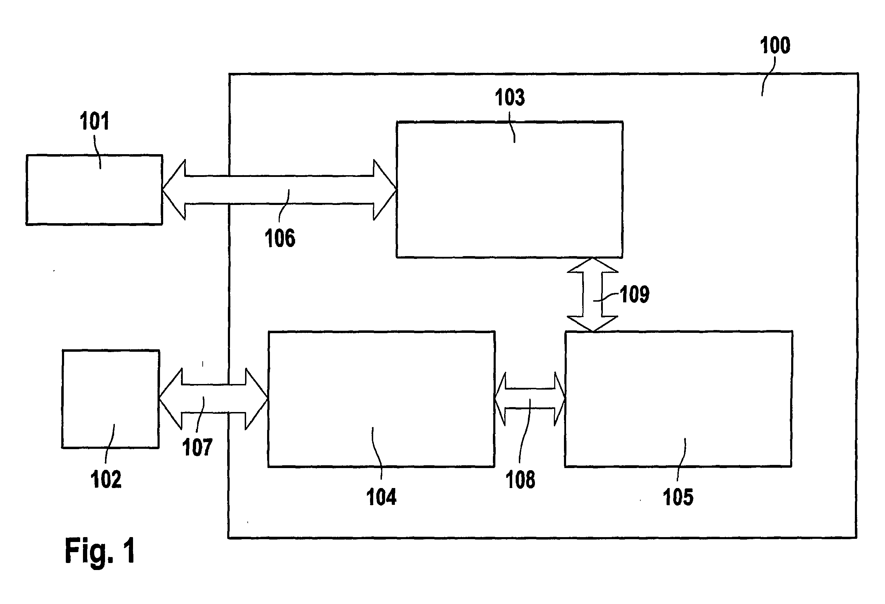

Dabei zeigt Figur 1 in schematischer Darstellung den Kommunikationsbaustein und dessen Anbindung an die physikalische Schicht, also die Kommunikationsverbindung und den Kommunikations- oder Host-Teilnehmer.

Figur 2 stellt in einer speziellen Ausführungsform den Kommunikationsbaustein aus Figur 1 sowie dessen Anbindung detaillierter dar.

In Figur 3 ist die Struktur des Botschaftsspeichers dargestellt.

Figur 4 bis 6 beschreibt schematisch die Architektur und den Prozess des Datenzugriffs in Richtung vom Teilnehmer zum Botschaflsspeicher.

Figur 7 bis 9 beschreibt schematisch Architektur und Prozess des Datenzugriffs in Richtung vom Botschaftsspeicher zum Teilnehmer.

In Figur 10 ist der Botschaftsverwalter und die darin enthaltenen Finite-State-Maschinen schematisch dargestellt.

Figur 11 zeigt noch einmal schematisch die Bauteile des Kommunikationsbausteins sowie den Teilnehmer und die entsprechenden, durch den Botschaftsverwalter gesteuerten Datenpfade.

Figur 12 beschreibt die Zugriffsverteilung bezogen auf die Datenpfade in Figur 11.

Die Erfindung wird nachfolgend anhand der Ausführungsbeispiele näher erläutert.

### Ausführungsbeispiele

Figur 1 zeigt schematisch einen FlexRay-Kommunikationsbaustein 100 zur Anbindung eines Teilnehmers oder Hosts 102 an eine FlexRay-Kommunikationsverbindung 101, also die physikalische Schicht des FlexRay. Dazu ist der FlexRay-Kommunikationsbaustein 100 über eine Verbindung 107 mit dem Teilnehmer bzw. Teilnehmerprozessor 102 und über eine Verbindung 106 mit der Kommunikationsverbindung 101 verbunden. Zur problemlosen Anbindung zum einen bezogen auf Übertragungszeiten und zum anderen bezogen auf die Datenintegrität sind schematisch im Wesentlichen drei Anordnungen im FlexRay-Kommunikationsbaustein unterschieden. Dabei dient eine erste Anordnung 105 zur Speicherung, insbesondere Zwischenablage, wenigstens eines Teils der zu übertragenden Botschaften. Zwischen dem Teilnehmer 102 und dieser ersten Anordnung 105 ist über die Verbindungen 107 und 108 eine zweite Anordnung 104 geschaltet. Ebenso ist zwischen Teilnehmer 101 und die erste Anordnung 105 eine dritte Anordnung 103 über die Verbindungen 106 und 109 geschaltet, wodurch ein sehr flexibles Eingeben und Ausgeben von Daten als Teil von Botschaften, insbesondere FlexRay-Botschaften in bzw. aus der ersten Anordnung 105 mit Gewährleistung der Datenintegrität bei optimaler Geschwindigkeit erzielbar ist.

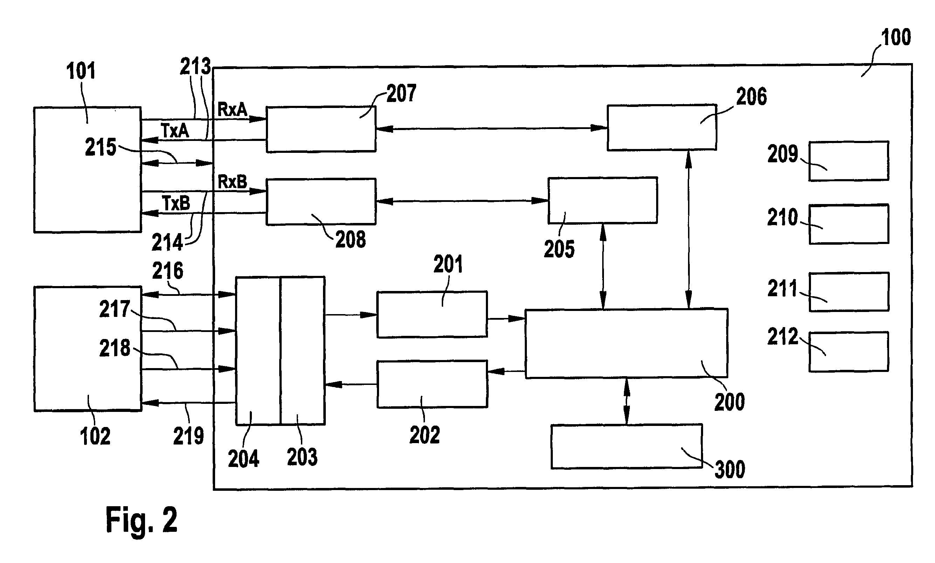

In Figur 2 ist dieser Kommunikationsbaustein 100 in einer bevorzugten Ausführungsform noch einmal detaillierter dargestellt. Ebenso detaillierter dargestellt sind die jeweiligen Verbindungen 106 bis 109. Die zweite Anordnung 104 enthält dabei einen Eingangspufferspeicher oder Eingabepufferspeicher 201 (Input Buffer IBF), einen Ausgangspufferspeicher oder Ausgabepufferspeicher 202 ( Output Buffer OBF) sowie einen Schnittstellenbaustein bestehend aus zwei Teilen 203 und 204, wobei der eine Teilbaustein 203 teilnehmerunabhängig und der zweite Teilbaustein 204 teilnehmerspezifisch ist. Der teilnehmerspezifische Teilbaustein 204 (Customer CPU Interface CIF) verbindet eine teilnehmerspezifische Host-CPU 102, also einen kundenspezifischen Teilnehmer mit dem FlexRay-Kommunikationsbaustein. Dazu ist eine bidirektionale Datenleitung 216, eine Adressleitung 217 sowie ein Steuereingang 218 vorgesehen. Ebenso vorgesehen ist mit 219 ein Interrupt- oder Unterbrechungs-Ausgang. Der teilnehmerspezifische Teilbaustein 204 steht in Verbindung mit einem teilnehmerunabhängigen Teilbaustein 203 (Generic CPU Interface, GIF), d. h. der FlexRay-Kommunikationsbaustein oder das FlexRay-IP-Modul verfügt über ein generisches, also allgemeines, CPU-Interface, an das sich über entsprechende teilnehmerspezifische Teilbausteine, also Customer CPU Interfaces CIF eine große Anzahl von unterschiedlichen kundenspezifischen Host CPU's anschliessen lassen. Dadurch muss abhängig vom Teilnehmer nur der Teilbaustein 204 variiert werden, was einen deutlich geringeren Aufwand bedeutet.

Der Eingabepufferspeicher oder Eingangspufferspeicher 201 und der Ausgangspufferspeicher oder Ausgabepufferspeicher 202 können in einem Speicherbaustein oder aber in getrennten Speicherbausteinen ausgebildet sein. Dabei dient der Eingabepufferspeicher 201 für die Zwischenspeicherung von Botschaften für die Übertragung zum Botschaftsspeicher 200. Dabei ist der Eingabepufferbaustein vorzugsweise so ausgebildet, dass er zwei vollständige Botschaften bestehend aus jeweils einem Kopfsegment oder Headersegment, insbesondere mit Konfigurationsdaten und ein Datensegment oder Payload Segment speichern kann. Dabei ist der Eingabepufferspeicher zweiteilig (Teilpufferspeicher und Schattenspeicher) ausgebildet, wodurch sich durch wechselweises Schreiben der beiden Teile des Eingabepufferspeichers bzw. durch Zugriffswechsel die Übertragung zwischen Teilnehmer-CPU 102 und Botschaftsspeicher 200 beschleunigen lässt. Ebenso dient der Ausgabepufferspeicher oder Ausgangspufferspeicher (Output-Buffer OBF) für die Zwischenspeicherung von Botschaften für die Übertragung vom Botschaftsspeicher 200 zur Teilnehmer-CPU 102. Dabei ist auch der Ausgabepuffer 202 so gestaltet, dass zwei komplette Botschaften bestehend aus Kopfsegment, insbesondere mit Konfigurationsdaten und Datensegment, also Payload Segment, gespeichert werden können. Auch hier ist der Ausgabepufferspeicher 202 in zwei Teile, einen Teilpufferspeicher und einen Schattenspeicher aufgeteilt, wodurch sich auch hier durch wechselweises Lesen der beiden Teile die Übertragung bzw. durch Zugriffswechsel die Übertragung zwischen Teilnehmer- bzw. Host-CPU 102 und Botschaflsspeicher 200 beschleunigen lässt. Diese zweite Anordnung 104 bestehend aus den Blöcken 201 bis 204 ist mit der ersten Anordnung 105 wie dargestellt verbunden.

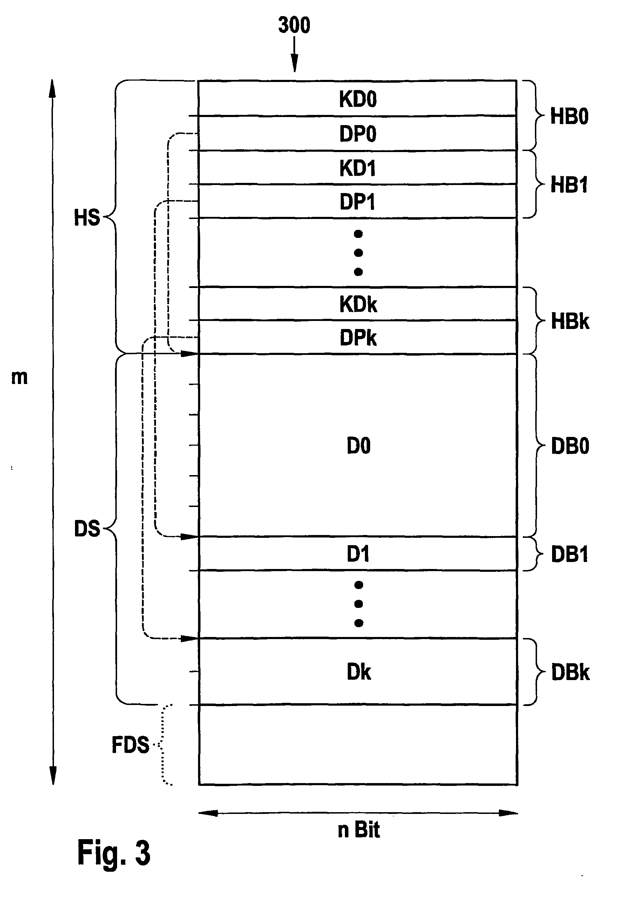

Die Anordnung 105 besteht aus einem Botschaftsverwalter 200 (Message Handler MHD) und einem Botschaftsspeicher 300 (Message RAM). Der Botschaftsverwalter kontrolliert bzw. steuert den Datentransfer zwischen dem Eingabepufferspeicher 201 sowie Ausgabepufferspeicher 202 und dem Botschaftsspeicher 300. Gleichermaßen kontrolliert bzw. steuert er die Datenübertragung in der anderen Richtung über die dritte Anordnung 103. Der Botschaftsspeicher ist vorzugsweise als single-ported RAM ausgeführt. Dieser RAM-Speicher speichert die Botschaften bzw. Botschaftsobjekte, also die eigentlichen Daten, zusammen mit Konfigurations- und Statusdaten. Die genaue Struktur des Botschaftsspeichers 300 ist in Figur 3 näher dargestellt.

Die dritte Anordnung 103 besteht aus den Blöcken 205 bis 208. Entsprechend den beiden Kanälen des FlexRay Physical Layer ist diese Anordnung 103 in zwei Datenpfade mit je zwei Datenrichtungen aufgeteilt. Dies wird durch die Verbindungen 213 und 214 deutlich, worin die beiden Datenrichtungen für den Kanal A, RxA und TxA für Empfangen (RxA) und Senden (TxA) sowie für Kanal B, RxB und TxB dargestellt sind. Mit Verbindung 215 ist ein optionaler bidirektionaler Steuereingang bezeichnet. Die Anbindung der dritten Anordnung 103 erfolgt über einen ersten Pufferspeicher 205 für Kanal B und einen zweiten Pufferspeicher 206 für Kanal A. Diese beiden Pufferspeicher (Transient Buffer RAM's: RAM A und RAM B) dienen als Zwischenspeicher für die Datenübertragung von bzw. zu der ersten Anordnung 105. Entsprechend der beiden Kanäle sind diese beiden Pufferspeicher 205 und 206 mit jeweils einem Schnittstellenbaustein 207 und 208 verbunden, die die FlexRay-Protokoll-Controller oder Busprotokoll-Controller bestehend aus einem Sende-/Empfangs-Schieberegister und der FlexRay Protokoll Finite State Maschine, enthalten. Die beiden Pufferspeicher 205 und 206 dienen somit als Zwischenspeicher für die Datenübertragung zwischen den Schieberegistern der Schnittstellenbausteine oder FlexRay Protokoll Controller 207 und 208 und dem Botschaflsspeicher 300. Auch hier werden vorteilhafter Weise durch jeden Pufferspeicher 205 oder 206 die Datenfelder, also das Payload Segment oder Datensegment zweier FlexRay-Botschaften gespeichert.

Weiterhin dargestellt im Kommunikationsbaustein 100 ist mit 209 die globale Zeiteinheit (Global Time Unit GTU), welche für die Darstellung der globalen Zeitraster im FlexRay, also den Mikrotick µT und den Makrotick MT zuständig ist. Ebenso wird über die globale Zeiteinheit 209 die fehlertolerante Uhrensynchronisation der Zykluszähler (Cycle Counter) und die Kontrolle der zeitlichen Abläufe im statischen und dynamischen Segment des FlexRay geregelt.

Mit Block 210 ist die allgemeine Systemsteuerung (System Universal Control SUC) dargestellt, durch welche die Operationsmodi des FlexRay-Kommunikationscontrollers kontrolliert und gesteuert werden. Dazu gehören der Wakeup, der Startup, die Reintegration bzw. Integration, Normaloperation (normal operation) und passive Operation (passive operation).

Block 211 zeigt das Netzwerk und Fehlermanagement (Network- und Error Management NEM), wie in der FlexRay-Protokollspezifikation v2.0 beschrieben. Block 212 schließlich zeigt die Unterbrechungssteuerung (Interrupt Control INT), welche die Status- und Fehlerunterbrechungsflaggen (Status and error interrupt flags) verwaltet und die Unterbrechungsausgänge 219 zur Teilnehmer-CPU 102 kontrolliert bzw. steuert. Der Block 212 enthält außerdem einen absoluten und einen relativen Timer bzw. Zeitgeber zur Erzeugung der Zeitunterbrechungen oder Timerinterrupts.

Für die Kommunikation in einem FlexRay-Netzwerk können Botschaftsobjekte bzw. Botschaften (Message Buffer) mit bis zu 254 Datenbytes konfiguriert werden. Der Botschaftsspeicher 300 ist insbesondere ein Botschafts-RAM-Speicher (Message RAM), welcher z.B. bis zu maximal 64 Botschaftsobjekten speichern kann. Alle Funktionen, die die Behandlung bzw. Verwaltung der Botschaften selbst betreffen, sind dem Botschaftsverwalter oder Message Handler 200 implementiert. Dies sind z.B. die Akzeptanzfilterung, Transfer der Botschaften zwischen den beiden FlexRay-Protokoll-Controller-Blöcken 207 und 208 und dem Botschaftsspeicher 300, also dem Message RAM sowie die Kontrolle der Sendereihenfolge und das Bereitstellen von Konfigurationsdaten bzw. Statusdaten.

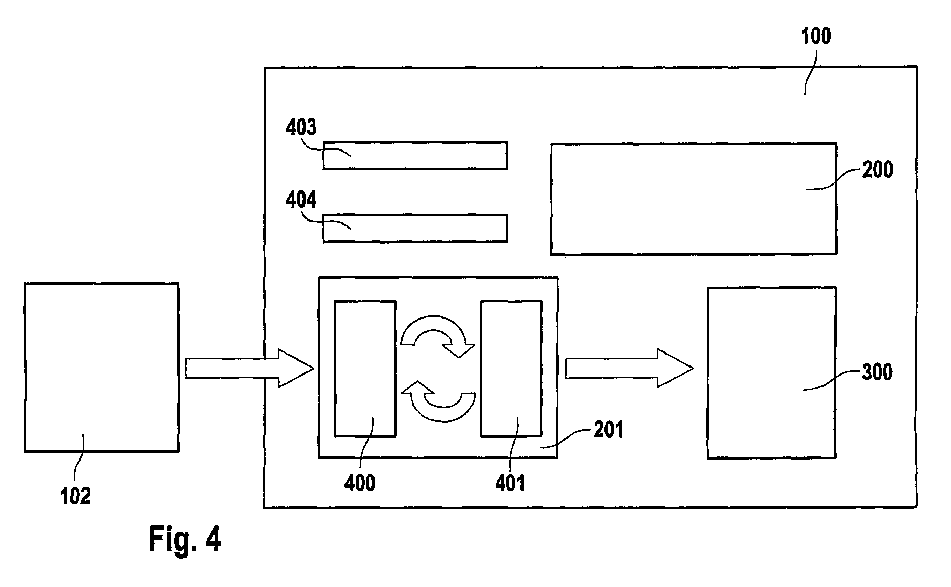

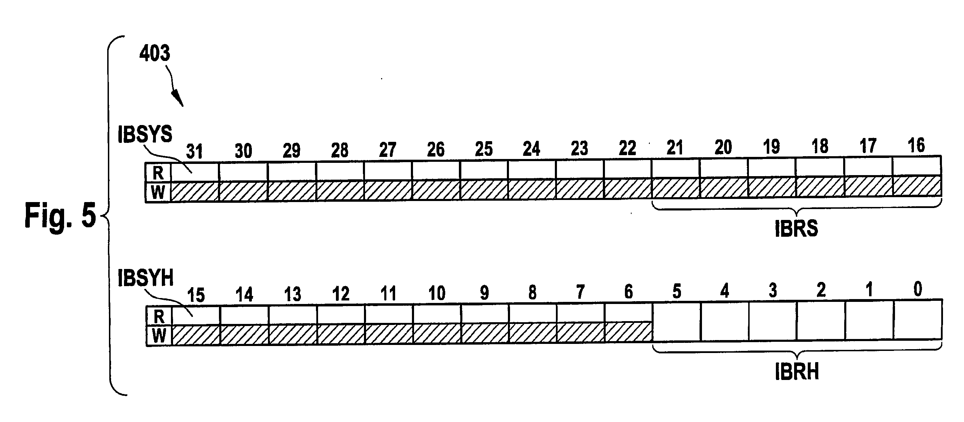

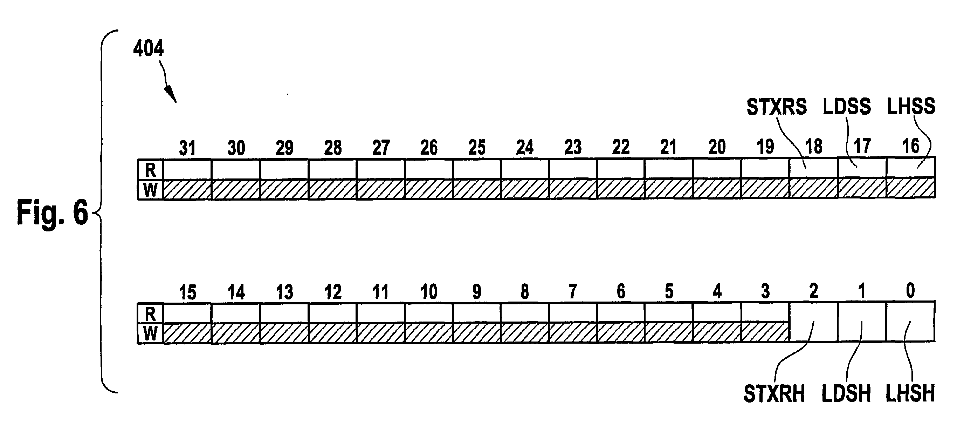

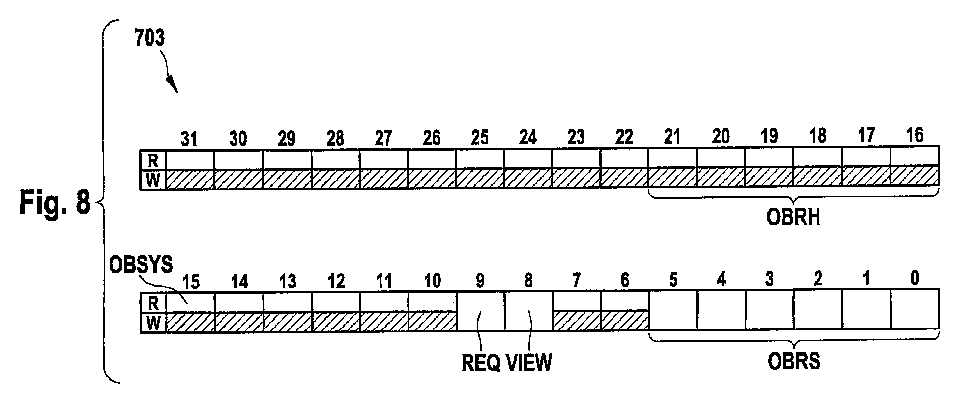

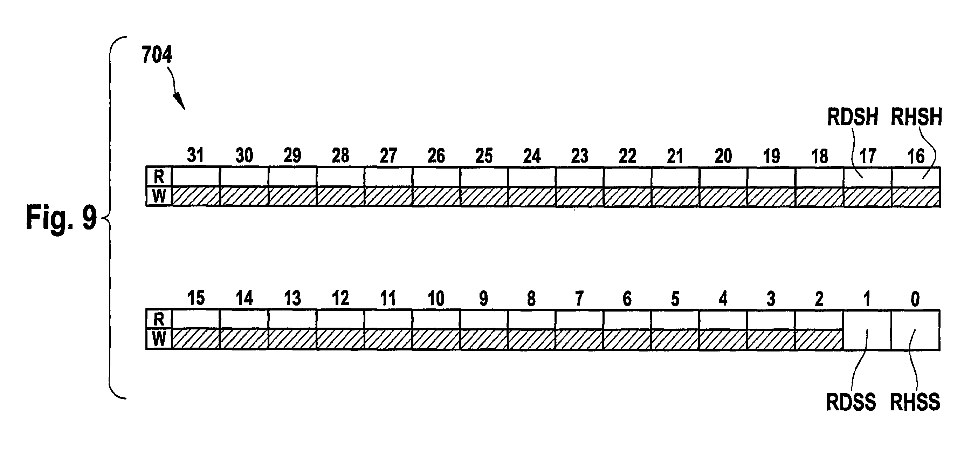

Eine externe CPU, also ein externer Prozessor der Teilnehmerprozessor 102 kann über die Teilnehmerschnittstelle, mit dem teilnehmerspezifischen Teil 204 direkt auf die Register des FlexRay-Kommunikationsbausteins zugreifen. Dabei wird eine Vielzahl von Registern verwendet. Diese Register werden eingesetzt, um die FlexRay Protokoll Controller, also die Schnittstellenbausteine 207 und 208 den Botschaftsverwalter (Message Handler MHD) 200, die globale Zeiteinheit (Global Time Unit GTU) 209, den allgemeinen Systemcontroller (System Universal Controller SUC) 210, die Netzwerk- und Fehlermanagementeinheit (Network und Error Management Unit NEM) 211, den Unterbrechungscontroller (Interrupt Controller INT) 212 sowie den Zugriff auf das Message RAM, also den Botschaftsspeicher 300 zu konfigurieren und zu steuern und ebenso den entsprechenden Status anzuzeigen. Zumindest auf Teile dieser Register wird noch in den Figuren 4 bis 6 und 7 bis 9 näher eingegangen. Ein solch beschriebener, erfindungsgemäßer FlexRay-Kommunikationsbaustein ermöglicht die einfache Umsetzung der FlexRay-Spezifikation v2.0, wodurch einfach ein ASIC oder ein Mikrocontroller mit entsprechender FlexRay-Funktionalität generiert werden kann.

In Figur 3 ist detailliert die Aufteilung des Botschaftsspeichers 300 beschrieben. Für die nach der FlexRay-Protokollspezifikation geforderte Funktionalität eines FlexRay Kommunikationscontrollers wird ein Botschaftsspeicher für das Bereitstellen von zu sendenden Botschaften (Transmit Buffer) sowie das Abspeichern von fehlerfrei empfangenen Botschaften (Receive Buffer) benötigt. Ein FlexRay-Protokoll erlaubt Botschaften mit einem Datenbereich, also einem Payload-Bereich von 0 bis 254 Bytes. Wie in Figur 2 dargestellt ist der Botschaftsspeicher Teil des FlexRay-Kommunikationsbausteins 100. Das nachfolgend beschriebene Verfahren sowie der entsprechende Botschaftsspeicher beschreiben die Speicherung von zu sendenden Botschaften sowie von empfangenen Botschaften, insbesondere unter Verwendung eines Random Access Memory (RAM), wobei es durch den erfindungsgemäßen Mechanismus möglich ist in einem Botschaftsspeicher vorgegebener Größe eine variable Anzahl von Botschaften zu speichern. Dabei ist die Anzahl der speicherbaren Botschaften abhängig von der Größe der Datenbereiche der einzelnen Botschaften, wodurch zum einen die Größe des benötigten Speichers minimiert werden kann ohne die Größe der Datenbereiche der Botschaften einzuschränken und zum anderen eine optimale Ausnutzung des Speichers erfolgt. Im Folgenden nun soll diese variable Aufteilung eines insbesondere RAM-basierten Botschaftsspeichers für einen FlexRay Communication Controller näher beschrieben werden.

Zur Implementierung wird nun beispielhaft ein Botschaftsspeicher mit einer festgelegten Wortbreite von n Bit, beispielsweise 8, 16, 32 usw., sowie einer vorgegebenen Speichertiefe von m Worten vorgegeben (m,n als natürliche Zahlen). Dabei wird der Botschaftsspeicher 300 in zwei Segmente aufgeteilt, ein Header Segment oder Kopfsegment HS und ein Datensegment DS (Payload Section, Payload Segment). Pro Botschaft wird somit ein Headerbereich HB und ein Datenbereich DB angelegt. Für Botschaften 0, 1 bis k (k als natürliche Zahl) werden somit Headerbereiche oder Kopfbereiche HB0, HB1 bis HBk und Datenbereiche DB0, DB1 bis DBk angelegt. In einer Botschaft wird also zwischen ersten und zweiten Daten unterschieden, wobei die ersten Daten Konfigurationsdaten und/oder Statusdaten bezüglich der FlexRay Botschaft entsprechen und jeweils in einem Headerbereich HB (HB0, HB1, ..., HBk) abgelegt werden. Die zweiten Daten, die den eigentlichen Daten entsprechen, die übertragen werden sollen, werden entsprechend in Datenbereichen DB (DB0 DB1,..., DBk) angelegt Somit entsteht für die ersten Daten pro Botschaft ein erster Datenumfang (in Bit, Byte oder Speicherworten gemessen) und für die zweiten Daten einer Botschaft ein zweiter Datenumfang (ebenfalls in Bit, Byte oder Speicherworten gemessen), wobei der zweite Datenumfang pro Botschaft unterschiedlich sein kann. Die Aufteilung zwischen Kopfsegment HS und Datensegment DS ist nun im Botschaftsspeicher 300 variabel, d. h. es existiert keine vorgegebene Grenze zwischen den Bereichen. Die Aufteilung zwischen Kopfsegment HS und Datensegment DS ist erfindungsgemäß abhängig von der Anzahl k der Botschaften sowie dem zweiten Datenumfang, also dem Umfang der eigentlichen Daten, einer Botschaft bzw. aller k Botschaften zusammen. Erfindungsgemäß wird nun den Konfigurationsdaten KD0 KD1 bis KDk der jeweiligen Botschaft ein Zeigerelement oder Datapointer DP0, DP1 bis DPk jeweils direkt zugeordnet. In der speziellen Ausgestaltung wird jedem Kopfbereich HB0 HB1 bis HBk eine feste Anzahl von Speicherworten, hier zwei, zugeordnet, so dass immer ein Konfigurationsdatum KD (KD0 KD1, ..., KDk) und ein Zeigerelement DP (DP0 DP1, ..., DPk) zusammen in einem Headerbereich HB abgelegt sind. An diesem Kopfsegment HS mit den Headerbereichen HB, dessen Größe bzw. erster Datenumfang abhängig von der Anzahl k der zu speichernden Botschaften ist, schließt das Datensegment DS zur Speicherung der eigentlichen Botschaftsdaten D0, D1 bis Dk an. Dieses Datensegment (oder Datensection) DS hängt in seinem Datenumfang vom jeweiligen Datenumfang der abgelegten Botschafttsdaten ab, hier z.B. in DB0 sechs Worte, DB1 ein Wort und DBk zwei Worte. Die jeweiligen Zeigerelemente DP0, DP1 bis DPk zeigen somit immer zum Beginn, also auf die Anfangsadresse des jeweiligen Datenbereichs DB0, DB1 bis DBk, in denen die Daten D0, D1 bis Dk der jeweiligen Botschaften 0, 1, bis k abgelegt sind. Damit ist die Aufteilung des Botschaftsspeichers zwischen Kopfsegment HS und Datensegment DS variabel und hängt von der Anzahl der Botschaften selbst sowie dem jeweiligen Datenumfang einer Botschaft und damit dem gesamten zweiten Datenumfang ab. Werden weniger Botschaften konfiguriert, wird das Kopfsegment kleiner und der frei werdende Bereich im Botschaftsspeicher kann als Zusatz zum Datensegment DS für die Speicherung von Daten verwendet werden. Durch diese Variabilität kann eine optimale Speicherausnutzung gewährleistet werden, womit auch die Verwendung kleinerer Speicher möglich ist. Das freie Datensegment FDS ,insbesondere dessen Größe, ebenfalls abhängig von der Kombination aus Anzahl k der gespeicherten Botschaften und dem jeweiligen zweiten Datenumfang der Botschaften ist somit minimal und kann sogar 0 werden.

Neben der Verwendung von Zeigerelementen ist es auch möglich, die ersten und zweiten Daten, also die Konfigurationsdaten KD (KD0, KD1,..., KDk) und die eigentlichen Daten D (D=, D1, ... ,Dk) in einer vorgebbaren Reihenfolge abzulegen, so dass die Reihenfolge der Kopfbereiche HB0 bis HBk im Kopfsegment HS und die Reihenfolge der Datenbereiche DB0 bis DBk im Datensegment DS jeweils identisch ist. Dann könnte unter Umständen sogar auf ein Zeigerelement verzichtet werden.

In einer besonderen Ausgestaltung ist dem Botschaftsspeicher ein Fehlerkennungserzeuger, insbesondere ein Parity-Bit-Generator-Element und ein Fehlerkennungsprüfer, insbesondere ein Parity-Bit-Prüf-Element zugeordnet, um die Korrektheit der gespeicherten Daten in HS und DS zu gewährleisten, indem pro Speicherwort oder pro Bereich (HB und/oder DB) eine Prüfsumme eben insbesondere als Parity-Bit mit abgelegt werden kann. Andere Kontrollkennungen, z.B. ein CRC (Cyclic redundancy check) oder auch Kennungen höherer Mächtigkeit wie ECC ( Error Code Correction) sind denkbar. Damit sind gegenüber einer festgelegten Aufteilung des Botschaftsspeichers folgende Vorteile gegeben:

Der Anwender kann bei der Programmierung entscheiden, ob er eine größere Anzahl von Botschaften mit kleinem Datenfeld oder ob er eine kleinere Anzahl von Botschaften mit großem Datenfeld verwenden möchte. Bei der Konfiguration von Botschaften mit unterschiedlich großem Datenbereich wird der vorhandene Speicherplatz optimal ausgenutzt. Der Anwender hat die Möglichkeit einen Datenspeicherbereich gemeinsam für unterschiedliche Botschaften zu nutzen.

Bei der Implementierung des Communication Controllers auf einer integrierten Schaltung kann die Größe des Botschaftsspeichers durch Anpassung der Speichertiefe des verwendeten Speichers an die Bedürfnisse der Applikation angepasst werden, ohne die sonstigen Funktionen des Communication Controllers zu ändern.

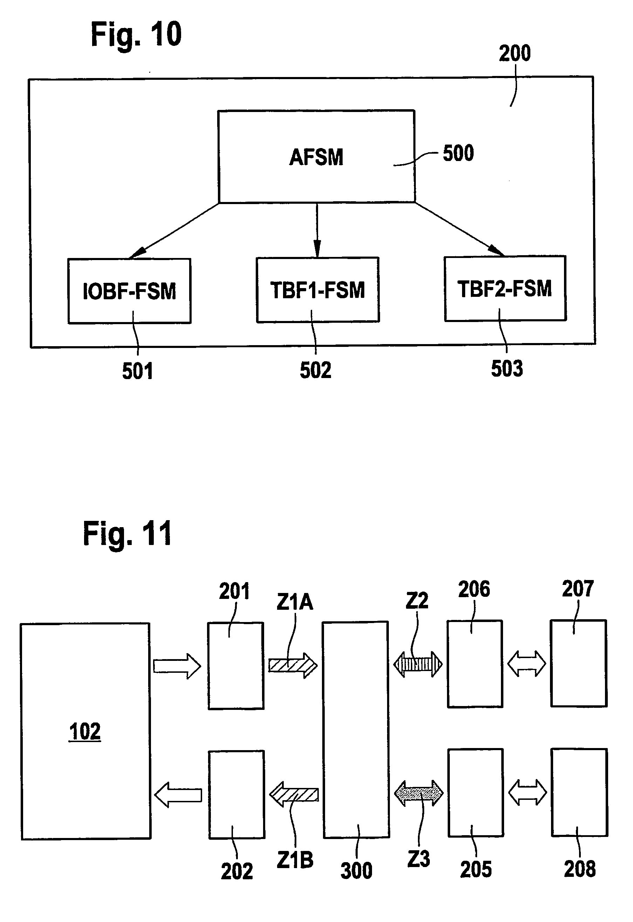

Im Weiteren wird nun anhand der Figuren 4 bis 6 sowie 7 bis 9 der Host-CPU-Zugriff, also Schreiben und Lesen von Konfigurationsdaten bzw. Statusdaten und der eigentlichen Daten über die Pufferspeicheranordnung 201 und 202 näher beschrieben. Dabei ist es das Ziel, eine Entkopplung bezüglich der Datenübertragung derart herzustellen, dass die Datenintegrität sichergestellt werden kann und gleichzeitig eine hohe Übertragungsgeschwindigkeit gewährleistet ist. Die Steuerung dieser Vorgänge erfolgt über den Botschaftsverwalter 200, was später noch näher in den Figuren 10, 11 und 12 beschrieben wird.

In den Figuren 4, 5 und 6 werden zunächst die Schreibzugriffe auf den Botschaftsspeicher 300 durch die Host-CPU der Teilnehmer-CPU 102 über den Eingangspufferspeicher 201 näher erläutert. Dazu zeigt Figur 4 noch einmal den Kommunikationsbaustein 100, wobei aus Gründen der Übersichtlichkeit nur die hier relevanten Teile des Kommunikationsbausteins 100 gezeigt sind. Dies ist zum einen der für die Steuerung der Abläufe verantwortliche Botschaftsverwalter 200 sowie zwei Kontrollregister 403 und 404, die wie dargestellt außerhalb des Botschaftsverwalters 200 im Kommunikationsbaustein 100 untergebracht sein können, aber auch im Botschaftsverwalter 200 selbst enthalten sein können. 403 stellt dabei das Eingangs-Anforderungsregister (Input Buffer Command Request Register) dar und 404 das Eingangs-Maskierungsregister (Input Buffer Command Mask Register). Schreibzugriffe der Host-CPU 102 auf den Botschaflsspeicher 300 (Message RAM) erfolgen also über einen zwischengeschalteten Eingangspufferspeicher 201 (Input Buffer). Dieser Eingangspufferspeicher 201 ist nun geteilt bzw, gedoppelt ausgelegt, und zwar als Teilpufferspeicher 400 und einem zu dem Teilpufferspeicher zugehörigen Schattenspeicher 401. Damit kann wie nachfolgend beschrieben ein kontinuierlicher Zugriff der Host-CPU 102 auf die Botschaften bzw. Botschaftsobjekte respektive Daten des Botschaftsspeichers 300 erfolgen und damit Datenintegrität und beschleunigte Übertragung gewährleistet werden. Die Steuerung der Zugriffe erfolgt über das Eingangs-Anforderungsregister 403 und über das Eingangs-Maskierungsregister 404. Im Register 403 sind mit den Zahlen von 0 bis 31 die jeweiligen Bitstellen in 403 hier beispielhaft für eine Breite von 32 Bit dargestellt. Gleiches gilt für das Register 404 und die Bitstellen 0 bis 31 in 404.

Erfindungsgemäß erhalten nun beispielhaft die Bitstellen 0 bis 5, 15, 16 bis 21 und 31 des Registers 403 bezüglich der Ablaufsteuerung eine besondere Funktion. So ist in die Bitstellen 0 bis 5 des Registers 403 eine Kennung IBRH (Input Buffer Request Host) als Botschaftskennung eintragbar. Ebenso ist in die Bitstellen 16 bis 21 des Registers 403 eine Kennung IBRS (Input Buffer Request Shaddow) eintragbar. Ebenso sind in Registerstelle 15 von 403 IBSYH und in Registerstelle 31 von 403 IBSYS als Zugriffskennungen eingetragen. Ausgezeichnet sind auch die Stellen 0 bis 2 des Registers 404, wobei in 0 und 1 mit LHSH (Load Header Section Host) und LDSH (Load Data Section Host) weitere Kennungen als Datenkennungen eingetragen sind. Diese Datenkennungen sind hier in einfachster Form, nämlich jeweils als ein Bit ausgebildet. In Bitstelle 2 von Register 404 ist mit STXRH (Set Transmission X Request Host) eine Startkennung eingeschrieben.
Im Weiteren wird nun der Ablauf des Schreibzugriffs auf den Botschaftsspeicher über den Eingangspuffer beschrieben.

Die Host-CPU 102 schreibt die Daten der zu transferierenden Botschaft in den Eingangspufferspeicher 201. Dabei kann die Host-CPU 102 nur die Konfigurations- und Headerdaten KD einer Botschaft für das Headersegment HS des Botschaftsspeichers oder nur die eigentlichen, zu übertragenden Daten D einer Botschaft für das Datensegment DS des Botschaftsspeichers oder beide schreiben. Welcher Teil einer Botschaft also Konfigurationsdaten und/oder die eigentlichen Daten übertragen werden soll, wird durch die speziellen Datenkennungen LHSH und LDSH im Eingangs-Markierungsregister 404 festgelegt. Dabei wird durch LHSH (Load Header Section Host) festgelegt ob die Headerdaten, also die Konfigurationsdaten KD, übertragen werden und durch LDSH (Load Data Section Host) festgelegt, ob die Daten D übertragen werden sollen. Dadurch, dass der Eingangspufferspeicher 201 zweiteilig mit einem Teil des Pufferspeichers 400 und einem dazugehörigen Schattenspeicher 401 ausgebildet ist und ein wechselseitiger Zugriff erfolgen soll sind als Gegenstück zu LHSH und LDSH zwei weitere Datenkennungsbereiche vorgesehen, die nun auf den Schattenspeicher 401 bezogen sind. Diese Datenkennungen in den Bitstellen 16 und 17 des Registers 404 sind mit LHSS (Load Header Section Shadow) und LDSS (Load Data Section Shadow) bezeichnet. Durch diese wird somit der Übertragungsvorgang bezüglich des Schattenspeichers 401 gesteuert.

Ist nun das Startbit bzw. die Startkennung STXRH (Set Transmission X Request Host) in Bitstelle 2 des Eingangs-Maskierungsregisters 404 gesetzt, so wird nach erfolgtem Transfer der jeweils zu übertragenden Konfigurationsdaten und/oder eigentlichen Daten in den Botschaflsspeicher 300 automatisch eine Sendeanforderung (Transmission Request) für das entsprechende Botschaftsobjekt gesetzt. D. h. durch diese Startkennung STXRH wird das automatische Senden eines übertragenden Botschaftsobjekts gesteuert, insbesondere gestartet.

Das Gegenstück hierzu entsprechend für den Schattenspeicher ist die Startkennung STXRS (Set Transmission X Request Shadow) welches beispielhaft in Bitstelle 18 des Eingangs-Markierungsregisters 404 enthalten ist und auch hier im einfachsten Fall eben als ein Bit ausgebildet ist. Die Funktion von STXRS ist analog der Funktion von STXRH, lediglich bezogen auf den Schattenspeicher 1.

Wenn die Host-CPU 102 die Botschaftskennung, insbesondere die Nummer des Botschaftsobjekts im Botschaftsspeicher 300 in welches die Daten des Eingangspufferspeichers 201 transferiert werden sollen in die Bitstellen 0 bis 5 des Eingangs-Anforderungsregisters 403, also nach IBRH schreibt werden der Teilpufferspeicher 400 des Eingangspufferspeichers 201 und der zugehörige Schattenspeicher 401 vertauscht bzw. es wird der jeweilige Zugriff von Host-CPU 102 und Botschaftsspeicher 300 auf die beiden Teilspeicher 400 und 401 vertauscht, wie durch die halbkreisförmigen Pfeile angedeutet. Dabei wird z.B. auch der Datentransfer, also die Datenübertragung zum Botschaftsspeicher 300 gestartet. Die Datenübertragung zum Botschaftsspeicher 300 selbst erfolgt aus dem Schattenspeicher 401. Gleichzeitig werden die Registerbereiche IBRH und IBRS getauscht Ebenso getauscht werden LHSH und LDSH gegen LHSS und LDSS. Gleichermaßen getauscht wird STXRH mit STXRS. IBRS zeigt somit die Kennung der Botschaft, also die Nummer des Botschaftsobjektes für das eine Übertragung, also ein Transfer aus dem Schattenspeicher 401 im Gange ist bzw. welches Botschaftsobjekt, also welcher Bereich im Botschaftsspeicher als letztes Daten (KD und/oder D) aus dem Schattenspeicher 401 erhalten hat. Durch die Kennung (hier wieder beispielsweise 1 Bit) IBSYS (Input Buffer Busy Shadow) in Bitstelle 31 des Eingangs-Anforderungsregisters 403 wird angezeigt ob gerade eine Übertragung mit Beteiligung des Schattenspeichers 401 erfolgt. So wird beispielsweise bei IBSYS=1 gerade aus dem Schattenspeicher 401 übertragen und bei IBSYS=0 eben nicht. Dieses Bit IBSYS wird beispielsweise durch das Schreiben von IBRH also Bitstellen 0 bis 5 in Register 403 gesetzt, um anzuzeigen, dass ein Transfer zwischen dem Schattenspeicher 401 und dem Botschaftsspeicher 300 im Gange ist. Nach Beendigung dieser Datenübertragung zum Botschaftsspeicher 300 wird IBSYS wieder zurückgesetzt.

Während der Datentransfer aus dem Schattenspeicher 401 gerade läuft kann die Host-CPU 102 die nächste zu transferierende Botschaft in den Eingangspufferspeicher bzw. in den Teilpufferspeicher 400 schreiben. Mit Hilfe einer weiteren Zugriffskennung IBSYH (Input Buffer Busy Host) beispielsweise in Bitstelle 15 von Register 403 kann die Kennung noch weiter verfeinert werden. Schreibt die Host-CPU 102 gerade IBRH, also die Bitstellen 0 bis 5 von Register 403 während eine Übertragung zwischen dem Schattenspeicher 401 und dem Botschaftsspeicher 300 läuft, also IBSYS=1 ist, so wird IBSYH im Eingangs-Anforderungsregister 403 gesetzt. Sobald der laufende Transfer also die laufende Übertragung abgeschlossen ist, wird der angeforderte Transfer (Anforderung durch STXRH siehe oben) gestartet und das Bit IBSYH zurückgesetzt. Das Bit IBSYS bleibt während der ganzen Zeit gesetzt, um anzuzeigen, dass Daten zum Botschaftsspeicher transferiert werden. Alle verwendeten Bits aller Ausführungsbeispiele können dabei auch als Kennungen mit mehr als einem Bit ausgebildet sein. Vorteilhaft ist die Ein-Bit Lösung aus speicher- und verarbeitungsökonomischen Gründen.

Der so beschriebene Mechanismus erlaubt es der Host-CPU 102 kontinuierlich Daten in die im Botschaftsspeicher befindlichen Botschaftsobjekte bestehend aus Headerbereich HB und Datenbereich DB zu transferieren, vorrausgesetzt die Zugriffgeschwindigkeit der Host-CPU 102 auf den Eingangspufferspeicher ist kleiner oder gleich der internen Datentransferrate des FlexRay-IP-Moduls also des Kommunikationsbausteins 100.

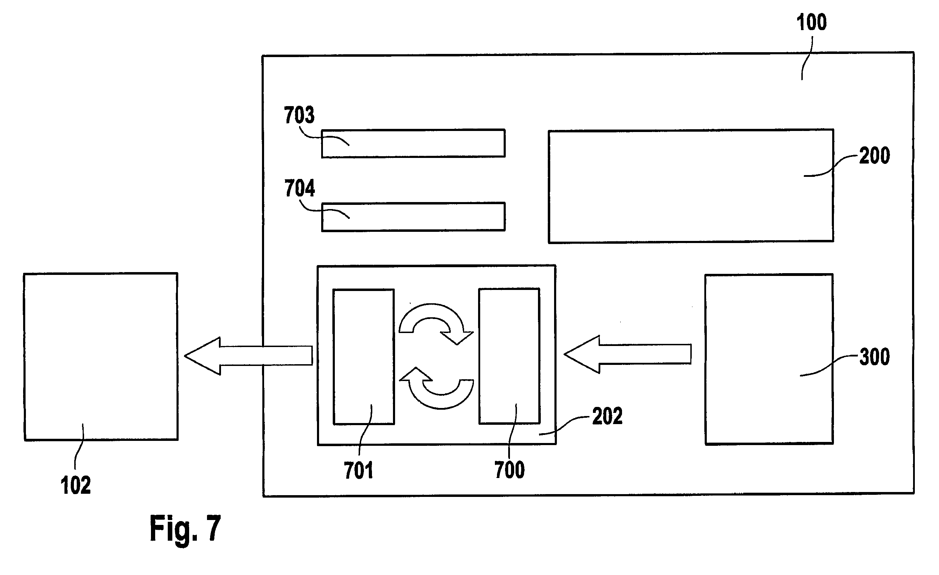

In den Figuren 7, 8 und 9 werden nun die Lesezugriffe auf den Botschaftsspeicher 300 durch die Host-CPU oder Teilnehmer-CPU 102 über den Ausgangspufferspeicher oder Ausgabepufferspeicher 202 näher erläutert. Dazu zeigt Figur 7 noch einmal den Kommunikationsbaustein 100, wobei aus Gründen der Übersichtlichkeit auch hier nur die relevanten Teile des Kommunikationsbausteins 100 gezeigt sind. Dies ist zum einen der für die Steuerung der Abläufe verantwortliche Botschaftsverwalter 200 sowie zwei Kontrollregister 703 und 704, die wie dargestellt außerhalb des Botschaftsverwalter 300 im Kommunikationsbaustein 100 untergebracht sein können, aber auch im Botschaflsverwalter 200 selbst enthalten sein können. 703 stellt dabei das Ausgangs-Anforderungsregister (Output Buffer Command Request Register) dar und 704 das Ausgangs-Maskierungsregister (Output Buffer Command Mask Register). Lesezugriffe der Host-CPU 102 auf den Botschaftsspeicher 300 erfolgen also über den zwischengeschalteten Ausgangspufferspeicher 202 (Output Buffer). Dieser Ausgangspufferspeicher 202 ist nun ebenfalls geteilt bzw. gedoppelt ausgelegt, und zwar als Teilpufferspeicher 701 und einem zu dem Teilpufferspeicher zugehörigen Schattenspeicher 700. Damit kann auch hier wie nachfolgend beschrieben ein kontinuierlicher Zugriff der Host-CPU 102 auf die Botschaften bzw. Botschaftsobjekte respektive Daten des Botschaflsspeichers 300 erfolgen und damit Datenintegrität und beschleunigte Übertragung nun in der Gegenrichtung vom Botschaftsspeicher zum Host gewährleistet werden. Die Steuerung der Zugriffe erfolgt über das Ausgangs-Anforderangsregister 703 und über das Eingangs-Maskierungsregister 704. Auch im Register 703 sind mit den Zahlen von 0 bis 31 die jeweiligen Bitstellen in 703 hier beispielhaft für eine Breite von 32 Bit dargestellt. Gleiches gilt für das Register 704 und die Bitstellen 0 bis 31 in 704.

Erfindungsgemäß erhalten nun beispielhaft die Bitstellen 0 bis 5, 8 und 9,15 und 16 bis 21 des Registers 703 bezüglich der Ablaufsteuerung des Lesezugriffs eine besondere Funktion. So ist in die Bitstellen 0 bis 5 des Registers 703 eine Kennung OBRS (Output Buffer Request Shadow) als Botschaftskennung eintragbar. Ebenso ist in die Bitstellen 16 bis 21 des Registers 703 eine Kennung OBRH (Output Buffer Request Host) eintragbar. Als Zugriffskennung ist in Bitstelle 15 von Register 703 eine Kennung OBSYS (Output Buffer Busy Shadow) eintragbar. Ausgezeichnet sind auch die Stellen 0 und 1 des Ausgabe-Maskierungsregisters 704, wobei in den Bitstellen 0 und 1 mit RDSS (Read Data Section Shadow) und RHSS (Read Header Section Shadow) weitere Kennungen als Datenkennungen eingetragen sind. Weitere Datenkennungen sind beispielsweise in den Bitstellen 16 und 17 mit RDSH (Read Data Section Host) und RHSH (Read Header Section Host) vorgesehen. Diese Datenkennungen sind auch hier beispielhaft in einfachster Form, nämlich jeweils als ein Bit ausgebildet. In Bitstelle 9 des Registers 703 ist eine Startkennung REQ eingetragen. Weiterhin ist eine Umschaltkennung VIEW vorgesehen die beispielhaft in Bitstelle 8 von Register 703 eingetragen ist.

Die Host-CPU 102 fordert die Daten eines Botschaftsobjekts aus dem Botschaftsspeicher 300 an, indem sie die Kennung der gewünschten Botschaft, also insbesondere die Nummer des gewünschten Botschaftsobjektes, nach OBRS also in die Bitstellen 0 bis 5 des Registers 703 schreibt. Auch hierbei kann die Host-CPU wie in der Gegenrichtung entweder nur die Status- bzw. Konfigurations- und Headerdaten KD einer Botschaft also aus einem Headerbereich oder nur die eigentlich zu übertragenden Daten D einer Botschaft also aus dem Datenbereich oder auch beide lesen. Welcher Teil der Daten also aus Headerbereich und/oder Datenbereich übertragen werden soll wird hierbei vergleichbar mit der Gegenrichtung durch RHSS und RDSS festgelegt. Das heißt RHSS gibt an, ob die Headerdaten gelesen werden sollen und RDSS gibt an, ob die eigentlichen Daten gelesen werden sollen.

Eine Startkennung dient dazu die Übertragung vom Botschaftsspeicher zum Schattenspeicher 700 zu starten. D.h. wird als Kennung wie im einfachsten Fall ein Bit verwendet, wird durch Setzen von Bit REQ in Bitstelle 9 im Ausgabe-Anforderungsregister 703 die Übertragung vom Botschaftsspeicher 300 zum Schattenspeicher 700 gestartet. Die laufende Übertragung wird wieder durch eine Zugriffskennung, hier wieder im einfachsten Fall durch ein Bit OBSYS im Register 703 angezeigt. Um Kollisionen zu vermeiden ist es vorteilhaft, wenn das Bit REQ nur dann gesetzt werden kann, wenn OBSYS nicht gesetzt ist also gerade keine laufende Übertragung erfolgt. Hier erfolgt dann auch der Botschaftstransfer zwischen dem Botschaftsspeicher 300 und dem Schattenspeicher 700. Der eigentliche Ablauf könnte nun einerseits vergleichbar zur Gegenrichtung wie unter den Figuren 4, 5 und 6 beschrieben gesteuert werden (komplementäre Registerbelegung) und erfolgen oder aber in einer Variation durch eine zusätzliche Kennung, nämlich eine Umschaltkennung VIEW in Bistelle 8 des Registers 703. D.h. nach Abschluss der Übertragung wird das Bit OBSYS zurückgesetzt und durch Setzen des Bits VIEW im Ausgabe-Anforderungsregister 703 werden der Teilpufferspeicher 701 und der zugehörige Schattenspeicher 700 getauscht bzw. es werden die Zugriffe darauf getauscht und die Host-CPU 102 kann nun das vom Botschaftsspeicher angeforderte Botschaftsobjekt also die entsprechende Botschaft aus dem Teilpufferspeicher 701 auslesen. Dabei werden auch hier vergleichbar mit der Gegenübertragungsrichtung in den Figuren 4 bist 6 die Registerzellen OBRS und OBRH getauscht. Gleichermaßen werden RHSS und RDSS gegen RHSH und RDSH getauscht Als Schutzmechanismus kann auch hier vorgesehen werden, dass das Bit VIEW nur dann gesetzt werden kann, wenn OBSYS nicht gesetzt ist, also keine laufende Übertragung stattfindet.

Somit erfolgen Lesezugriffe der Host-CPU 102 auf den Botschaftsspeicher 300 über einen zwischengeschalteten Ausgangspufferspeicher 202. Dieser Ausgangspufferspeicher ist ebenso wie der Eingangspufferspeicher doppelt bzw. zweiteilig ausgelegt um einen kontinuierlichen Zugriff der Host-CPU 102 auf die Botschaftsobjekte die im Botschaftsspeicher 300 abgelegt sind zu gewährleisten. Auch hier werden die Vorteile der hohen Datenintegrität und der beschleunigten Übertragung erzielt.

Durch die Verwendung der beschriebenen Eingangs- und Ausgangspuffer wird sichergestellt, dass eine Host-CPU trotz der modulinternen Latenzzeiten unterbrechungsfrei auf den Botschaftsspeicher zugreifen kann.

Zur Sicherstellung dieser Datenintegrität wird die Datenübertragung, insbesondere die Weiterleitung im Kommunikationsbaustein 100 durch den Botschaftsverwalter 200 (Message Handler MHD) vorgenommen. Dazu ist in Figur 10 der Botschaftsverwalter 200 dargestellt. Der Botschaftsverwalter ist in seiner Funktionalität durch mehrere Zustandsmaschinen oder Zustandsautomaten, also endliche Automaten, sogenannte Finite-State-Maschinen (FSM) darstellbar. Dabei sind wenigstens drei Zustandsmaschinen und in einer besonderen Ausführungsform vier Finite-State-Maschinen vorgesehen. Eine erste Finite-State-Maschine ist die IOBF-FSM und mit 501 bezeichnet (Input/Output Buffer State Maschine). Diese IOBF-FSM könnte auch je Übertragungsrichtung bezüglich des Eingangspufferspeichers oder des Ausgangspufferspeichers in zwei Finite-State-Maschinen aufgeteilt sein IBF-FSM (Input Buffer FSM) und OBF-FSM (Output Buffer FSM), womit maximal fünf Zustandsautomaten (IBF-FSM, OBF-FSM, TBF1-FSM, TBF2-FSM, AFSM) denkbar wären. Bevorzugt ist aber eine gemeinsame IOBF-FSM vorzusehen. Eine wenigstens zweite Finite-State-Maschine ist hier im Zuge des bevorzugten Ausführungsbeispiels in zwei Blöcke 502 und 503 aufgeteilt und bedient die beiden Kanäle A und B bezüglich der Speicher 205 und 206, wie zu Fig. 2 beschrieben. Dabei kann eine Finite-State-Maschine vorgesehen sein um beide Kanäle A und B zu bedienen oder aber wie in der bevorzugten Form eine Finite-State-Maschine TBF1-FSM mit 502 bezeichnet (Transient Buffer 1 (206, RAM A) State Maschine) für Kanal A und für Kanal B eine TBF2-FSM mit 503 bezeichnet (Transient Buffer 2 (205, RAM B) State Maschine).

Zur Steuerung des Zugriffs der drei Finite-State-Maschinen 501-503 im bevorzugten Ausführungsbeispiel dient eine Arbiter-Finite-State-Maschine, die sogenannte AFSM, die mit 500 bezeichnet ist. Die Daten (KD und/oder D) werden in einem durch ein Taktmittel, wie z.B. ein VCO (Voltage controlled oszillator), einen Schwingquarz usw. generierten oder aus diesem angepassten Takt im Kommunikationsbaustein übertragen. Der Takt T kann dabei im Baustein generiert werden oder von außen, z.B. als Bustakt vorgegeben sein. Diese Arbiter-Finite-State-Maschine AFSM 500 gibt abwechselnd einer der drei Finite-State-Maschinen 501-503, insbesondere jeweils für eine Taktperiode T Zugriff auf den Botschaftsspeicher. D.h. die zur Verfügung stehende Zeit wird entsprechend den Zugriffsanforderungen der einzelnen Zustandsautomaten 501, 502, 503 auf diese anfordernden Zustandsautomaten aufgeteilt. Erfolgt eine Zugriffsanforderung von nur einer Finite-State-Maschine, so erhält diese 100% der Zugriffszeit, also alle Takte T. Erfolgt eine Zugriffsanforderung von zwei Zustandsautomaten, erhält jede Finite-State-Maschine 50% der Zugriffszeit. Erfolgt schließlich eine Zugriffsanforderung von drei Zustandsautomaten so erhält jede der Finite-State-Maschinen 1/3 der Zugriffszeit. Dadurch wird die jeweils zur Verfügung stehende Bandbreite optimal genutzt.

Die erste Finite-State-Maschine mit 501 bezeichnet, also IOBF-FSM führt bei Bedarf folgende Aktionen aus:
- Datentransfer vom Eingangspufferspeicher 201 zum ausgewählten Botschaftsobjekt im Botschaftsspeicher 300.
- Datentransfer vom ausgewählten Botschaftsobjekt im Botschaftsspeicher 300 zum Ausgangspufferspeicher 202.

Die Zustandsmaschine für Kanal A 502, also TBF1FSM, führt folgende Aktionen aus:
- Datentransfer vom ausgewählten Botschaftsobjekt im Botschaftsspeicher 300 zum Pufferspeicher 206 von Kanal A.
- Datentransfer vom Pufferspeicher 206 zum ausgewählten Botschaftsobjekt im Botschaftsspeicher 300.
- Suche nach dem passenden Botschaflsobjekt im Botschaftsspeicher, wobei bei Empfang das Botschaftsobjekt (Receive Buffer) zum Abspeichern einer auf Kanal A empfangenen Botschaft im Rahmen einer Akzeptanzfilterung gesucht wird und beim Senden das nächste auf Kanal A zu sendende Botschaftsobjekt (Transmit Buffer).

Analog dazu ist die Aktion von TBF2-FSM, also der Finite-State-Maschine für Kanal B in Block 503. Diese führt den Datentransfer vom ausgewählten Botschaftsobjekt im Botschaftsspeicher 300 zum Pufferspeicher 205 von Kanal B aus und den Datentransfer vom Pufferspeicher 205 zum ausgewählten Botschaftsobjekt im Botschaftsspeicher 300. Auch die Suchfunktion ist analog zu TBF1-FSM nach einem passenden Botschaftsobjekt im Botschaftsspeicher, wobei bei Empfang das Botschaftsobjekt (Receive Buffer) zum Abspeichern einer auf Kanal B empfangenen Botschaft im Rahmen einer Akzeptanzfilterung gesucht wird und beim Senden die nächste auf Kanal B zu sendende Botschaft oder Botschaftsobjekt (Transmit Buffer).

In Figur 11 sind nun noch einmal die Abläufe und die Übertragungswege dargestellt. Die drei Zustandsmaschinen 501-503 steuern die jeweiligen Datenübertragungen zwischen den einzelnen Teilen. Dabei ist mit 102 wieder die Host-CPU dargestellt, mit 201 der Eingangspufferspeicher und mit 202 der Ausgangspufferspeicher. Mit 300 ist der Botschaftsspeicher dargestellt und die beiden Pufferspeicher für Kanal A und Kanal B mit 206 und 205. Die Schnittstellenelemente 207 und 208 sind ebenfalls dargestellt. Der erste Zustandsautomat IOBF-FSM, mit 501 bezeichnet steuert den Datentransfer Z1A und Z1B, also vom Eingangspufferspeicher 201 zum Botschaflsspeicher 300 und vom Botschaftsspeicher 300 zum Ausgangspufferspeicher 202. Die Datenübertragung erfolgt dabei über Datenbusse mit einer Wortbreite von beispielsweise 32 Bit wobei auch jede andere Bitzahl möglich ist. Gleiches gilt für die Übertragung Z2 zwischen dem Botschaftsspeicher und dem Pufferspeicher 206. Diese Datenübertragung wird durch TBF1-FSM, also 502 die Zustandsmaschine für Kanal A, gesteuert. Die Übertragung Z3 zwischen Botschaflsspeicher 300 und Pufferspeicher 205 wird durch den Zustandsautomaten TBF2-FSM, also 503 gesteuert. Auch hier erfolgt der Datentransfer über Datenbusse mit einer beispielhaften Wordbreite von 32 Bit, wobei auch hier jede andere Bitzahl möglich ist. Normalerweise benötigt der Transfer eines kompletten Botschaftsobjektes über die genannten Übertragungswege mehrere Taktperioden T. Daher erfolgt eine Aufteilung der Übertragungszeit bezogen auf die Taktperioden T durch den Arbiter, also die AFSM 500. In Figur 11 sind also die Datenpfade zwischen denen vom Message Handler kontrollierten Speicherkomponenten dargestellt. Um die Datenintegrität der im Botschaftsspeicher gespeicherten Botschaftsobjekte sicherzustellen, sollten vorteilhafterweise zur gleichen Zeit nur auf einem der dargestellten Pfade also Z1A und Z1B sowie Z2 und Z3 gleichzeitig Daten ausgetauscht werden.

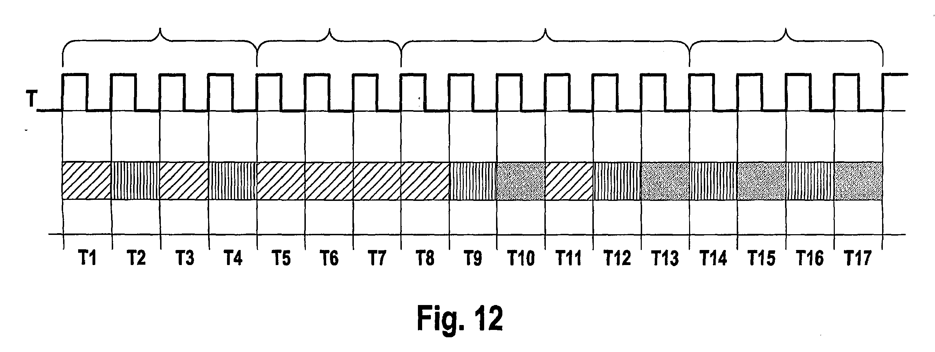

In Abbildung 12 ist an einem Beispiel gezeigt, wie die zur Verfügung stehenden Systemtakte T vom Arbiter, also der AFSM 500, auf die drei anfordernden Zustandsautomaten aufgeteilt werden. In Phase 1 erfolgen Zugriffsanforderungen von Zustandsautomat 501 und Zustandsautomat 502, d.h., dass die gesamte Zeit jeweils zur Hälfte auf die beiden anfordernden Zustandautomaten aufgeteilt wird. Bezogen auf die Taktperioden in Phase 1 bedeutet dies, dass Zustandsautomat 501 in den Taktperioden T1 und T3 Zugriff erhält und Zustandsautomat 502 in den Taktperioden T2 und T4. In Phase 2 erfolgt der Zugriff nur durch die Zustandsmaschine 501, sodass alle drei Taktperioden, also 100% der Zugriffszeit von T5 bis T7 auf IOBF-FSM entfällt In Phase 3 erfolgen Zugriffsanforderungen aller drei Zustandsautomaten 501 bis 503, sodass eine Drittelung der Gesamtzugriffszeit erfolgt. Der Arbiter AFSM verteilt dann die Zugriffszeit beispielsweise so, dass in den Taktperioden T8 und T11 die Finite-State-Maschine 501, in den Taktperioden T9 und T12 die Finite-State-Maschine 502 und in den Taktperioden T10 und T13 die Finite-State-Maschine 503 Zugriff erhält. In Phase 4 schließlich erfolgt der Zugriff durch zwei Zustandsautomaten, 502 und 503 auf den beiden Kanälen A und B des Kommunikationsbausteins, sodass eine Zugriffsverteilung der Taktperioden T14 und T16 an Finite-State-Maschine 502 und in T15 und T17 an Finite-State-Maschine 503 erfolgt.

Der Arbiterzustandsautomat AFSM 500 sorgt also dafür, dass für den Fall wenn mehr als eine der drei Zustandsmaschinen eine Anforderung für einen Zugriff auf den Botschaftsspeicher 300 stellt, der Zugriff taktweise und abwechselnd auf die anfordernden Zustandsmaschinen aufgeteilt wird. Diese Vorgehensweise stellt die Integrität der im Botschaftsspeicher abgelegten Botschaftsobjekte, also die Datenintegrität, sicher. Will zum Beispiel die Host-CPU 102 über den Ausgangspufferspeicher 202 ein Botschaftsobjekt auslesen während gerade eine empfangene Botschaft in dieses Botschaftsobjekt geschrieben wird, so wird abhängig davon welche Anforderung zuerst gestartet wurde entweder der alte Stand oder der neue Stand ausgelesen, ohne das die Zugriffe im Botschaftsobjekt im Botschaftsspeicher selbst kollidieren.

Das beschriebene Verrfahren ermöglicht der Host-CPU im laufenden Betrieb jedes beliebige Botschaftsobjekt im Botschaflsspeicher zu lesen oder zu schreiben, ohne dass das ausgewählte Botschaftsobjekt für die Dauer des Zugriffs der Host-CPU von der Teilnahme am Datenaustausch auf beiden Kanälen des FlexRay Busses gesperrt wäre (Buffer Locking). Gleichzeitig wird durch die taktweise Verschachtelung der Zugriffe die Integrität der im Botschaftsspeicher abgelegten Daten sichergestellt und die Übertragungsgeschwindigkeit, auch durch Ausnutzung der vollen Bandbreite erhöht.

## Patentansprüche

1. Kommunikationsbaustein (100) mit einem Botschaftsverwalter (200) und mit einem Botschaftsspeicher (300), bei welchem bei einem Zugriff Daten eingegeben oder ausgegeben werden, wobei der Botschaftsspeicher (300) mit einer ersten Pufferspeicheranordnung (205, 206) und einer zweiten Pufferspeicheranordnung (201, 202) verbunden ist, ein Zugriff auf die Daten über die erste oder die zweite Pufferspeicheranordnung erfolgt, und wobei die erste Pufferspeicheranordnung (205, 206) zwischen dem Botschaftsspeicher (300) und einer Schnittstelle (207, 208) zu einer Kommunikationsverbindung (101) angeordnet ist sowie die zweite Pufferspeicheranordnung (201, 202) zwischen dem Botschaftsspeicher (300) und einer Schnittstelle (203, 204) zu einem Teilnehmerprozessor (102) angeordnet ist,
**dadurch gekennzeichnet, dass**
- in dem Botschaftsverwalter (200) wenigstens eine erste Finite State Maschine (502, 503) vorgesehen ist, die den Zugriff auf den Botschaftsspeicher über die erste Pufferspeicheranordnung (205, 206) steuert und
- wenigstens eine zweite Finite State Maschine (501) vorgesehen ist, die den Zugriff über die zweite Pufferspeicheranordnung (201, 202) steuert, wobei die wenigstens eine erste Finite State Maschine und die zweite Finite State Maschine Zugriffsanforderungen stellen und
- eine dritte Finite State Maschine (500) vorgesehen ist, welche der wenigstens einen ersten und der zweiten Finite State Maschine abhängig von derer Zugriffsanforderungen Zugriff auf den Botschaftsspeicher zuteilt,
- dass Taktmittel vorgesehen sind durch welche die Daten in einer vorgebbaren Taktperiode (T) übertragen werden und die dritte Finite State Maschine (500) jeder ersten Finite State Maschine (502, 503) und der zweiten Finite State Maschine (501) abhängig von deren Zugriffsanforderungen nacheinander Taktperioden (T1-T17) zuteilt,
- dass Mittel vorgesehen sind, eine gesamte Zugriffszeit abhängig von einer Anzahl gleichzeitiger Zugriffsanforderungen gleichmäßig entsprechend der Anzahl
- durch die dritte Finite State Maschine (500) aufzuteilen, wobei pro Finite State Maschine gleichzeitig immer nur eine Zugriffsanforderung zulässig ist, und
- dass Mittel vorgesehen sind, die zweite Pufferspeicheranordnung (201, 202) bis zu einem Abschluss einer Übertragung eines Botschaftsobjekts in einer ersten Übertragungsrichtung zwischen der zweiten Pufferspeicheranordnung (201, 202) und dem Botschaftsspeicher (300) für weitere Zugriffe in die erste Übertragungsrichtung zu sperren.

2. Kommunikationsbaustein (100) nach Anspruch 1, **dadurch gekennzeichnet, dass** die Daten über die erste Pufferspeicheranordnung (205, 206) in zwei Datenpfade mit jeweils zwei Datenrichtungen übertragen werden und die erste Pufferspeicheranordnung (205, 206) einen ersten Pufferspeicher (206) für einen ersten Datenpfad und einen zweiten Pufferspeicher (205) für einen zweiten Datenpfad enthält und je Datenpfad jeweils eine erste Finite State Maschine (502, 503) vorgesehen ist, wobei jede der beiden ersten Finite State Maschinen den Zugriff auf den Botschaftsspeicher über je einen Pufferspeicher steuert.

3. Verfahren zur Steuerung des Zugriffs auf Daten eines Botschaftsspeichers (300) eines Kommunikationsbausteins durch einen Botschaftsverwalter (200), wobei bei einem Zugriff Daten in den Botschaftsspeicher (300) eingegeben oder ausgegeben werden, wobei der Botschaftsspeicher (300) mit einer ersten Pufferspeicheranordnung (205, 206) und einer zweiten Pufferspeicheranordnung (201, 202) verbunden ist und ein Zugriff auf die Daten über die erste oder die zweite Pufferspeicheranordnung erfolgt, und wobei die erste Pufferspeicheranordnung (205, 206) zwischen dem Botschaftsspeicher (300) und einer Schnittstelle (207, 208) zu einer Kommunikationsverbindung (101) angeordnet ist sowie die zweite Pufferspeicheranordnung (201, 202) zwischen dem Botschaftsspeicher (300) und einer Schnittstelle (203, 204) zu einem Teilnehmerprozessor (102) angeordnet ist, **dadurch gekennzeichnet, dass**
- erste Finite State Maschine des Botschaftsverwalters (200) den Zugriff auf den Botschaftsspeicher über die erste Pufferspeicheranordnung (205, 206) als einem ersten Zugriffspfad steuert und
- eine zweite Finite State Maschine des Botschaftsverwalters (200) den Zugriff auf den Botschaftsspeicher über die zweite Pufferspeicheranordnung (201, 202) als einem zweiten Zugriffspfad steuert, wobei auf die Daten zur gleichen Zeit nur auf einem der Zugriffspfade zugegriffen wird,
- dass die Daten in einer vorgebbaren Taktperiode (T) übertragen werden und die dritte Finite State Maschine (500) jeder ersten Finite State Maschine (502, 503) und der zweiten Finite State Maschine (501) abhängig von deren Zugriffsanforderungen nacheinander Taktperioden (T1-T17) zuteilt,
- eine gesamte Zugriffszeit abhängig von einer Anzahl gleichzeitiger Zugriffsanforderungen gleichmäßig entsprechend der Anzahl durch die dritte Finite State Maschine (500) aufgeteilt wird, wobei pro Finite State Maschine gleichzeitig immer nur eine Zugriffsanforderung zulässig ist, und
- die zweite Pufferspeicheranoidnunp (201, 202) bis zu einem Abschluss einer Übertragung eines Botschaftsobjekts in einer ersten Übertragungsrichtung zwischen der zweiten Pufferspeicheranordnung (201, 202) und dem Botschaftsspeicher (300) für weitere Zugriffe in die erste Übertragungsrichtung gesperrt wird.

4. Verfahren nach Anspruch 3, **dadurch gekennzeichnet, dass** die Daten über die erste Pufferspeicheranordnung (205, 206) in zwei Datenpfade mit jeweils zwei Datenrichtungen übertragen werden und die erste Pufferspeicheranordnung (205, 206) einen ersten Pufferspeicher (206) für einen ersten Datenpfad und einen zweiten Pufferspeicher (205) für einen zweiten Datenpfad enthält und je Datenpfad jeweils eine erste Finite State Maschine (502, 503) vorgesehen ist, wobei jede der beiden ersten Finite State Maschinen den Zugriff auf den Botschaftsspeicher über je einen Pufferspeicher steuert.

## Claims

1. Communication chip (100) having a message manager (200) and having a message store (300), in which an access operation involves data being input or output, wherein the message store (300) is connected to a first buffer store arrangement (205, 206) and to a second buffer store arrangement (201, 202), the data are accessed via the first or the second buffer store arrangement, and wherein the first buffer store arrangement (205, 206) is arranged between the message store (300) and an interface (207, 208) to a communication link (101) and the second buffer store arrangement (201, 202) is arranged between the message store (300) and an interface (203, 204) to a subscriber processor (102),
**characterized in that**
- the message manager (200) contains at least one first finite state machine (502, 503), which controls the access to the message store via the first buffer store arrangement (205, 206), and
- at least one second finite state machine (501), which controls the access via the second buffer store arrangement (201, 202), wherein the at least one first finite state machine and the second finite state machine make access requests, and
- a third finite state machine (500), which allocates the at least one first and the second finite state machine access to the message store on the basis of the access requests from said finite state machines,
- **in that** clock means are provided which transfer the data in a prescribable clock period (T) and by means of which the third finite state machine (500) allocates each first finite state machine (502, 503) and the second finite state machine (501) clock periods (T1-T17) in succession on the basis of the access requests from said finite state machines,
- **in that** means are provided for splitting a total access time, on the basis of a number of simultaneous access requests, evenly in line with said number by means of the third finite state machine (500), wherein only one access request is ever admissible per finite state machine at the same time, and
- **in that** means are provided for disabling the second buffer store arrangement (201, 202) for further access operations in a first transmission direction until conclusion of transmission of a message object in said first transmission direction between the second buffer store arrangement (201, 202) and the message store (300).

2. Communication chip (100) according to Claim 1, **characterized in that** the data are transmitted via the first buffer store arrangement (205, 206) in two data paths with two respective data directions, and the first buffer store arrangement (205, 206) contains a first buffer store (206) for a first data path and a second buffer store (205) for a second data path and, for each data path, a respective first finite state machine (502, 503) is provided, wherein each of the two first finite state machines controls the access to the message store via a respective buffer store.

3. Method for controlling the access to data in a message store (300) in a communication chip by means of a message manager (200), wherein an access operation involves data being input into the message store (300) or being output, wherein the message store (300) is connected to a first buffer store arrangement (205, 206) and to a second buffer store arrangement (201, 202), and the data are accessed via the first or the second buffer store arrangement, and wherein the first buffer store arrangement (205, 206) is arranged between the message store (300) and an interface (207, 208) to a communication link (101) and the second buffer store arrangement (201, 202) is arranged between the message store (300) and an interface (203, 204) to a subscriber processor (102), **characterized in that**
- a first finite state machine of the message manager (200) controls the access to the message store via the first buffer store arrangement (205, 206) as a first access path, and
- a second finite state machine of the message manager (200) controls the access to the message store via the second buffer store arrangement (201, 202) as a second access path, wherein the data are accessed at the same time only on one of the access paths,
- **in that** the data are transmitted in a prescribable clock period (T), and that the third finite state machine (500) allocates each first finite state machine (502, 503) and the second finite state machine (501) clock periods (T1-T17) in succession on the basis of the access requests from said finite state machines,
- a total access time is split, on the basis of a number of simultaneous access requests, evenly in line with said number by the third finite state machine (500), wherein only one access request is ever admissible time per finite state machine at the same, and
- the second buffer store arrangement (201, 202) is disabled for further access operations in a first transmission direction until conclusion of transmission of a message object in said first transmission direction between the second buffer store arrangement (201, 202) and the message store (300).

4. Method according to Claim 3, **characterized in that** the data are transmitted via the first buffer store arrangement (205, 206) in two data paths with two respective data directions, and a first buffer store arrangement (205, 206) contains the first buffer store (206) for a first data path and a second buffer store (205) for a second data path and, for each data path, a respective first finite state machine (502, 503) is provided, wherein each of the two first finite state machines controls the access to the message store via a respective buffer store.

## Revendications

1. Module de communication (100) qui présente un gestionnaire de messages (200) et une mémoire à messages (300),
des données étant introduites ou délivrées lors d'un accès,
la mémoire à messages (300) étant reliée à un premier système (205, 206) de mémoires tampons et à un deuxième système (201, 202) de mémoires tampons,
l'accès aux données s'effectuant par l'intermédiaire du premier ou du deuxième système de mémoires tampons,
le premier système (205, 206) de mémoires tampons étant disposé entre la mémoire à messages (300) et une interface (207, 208) avec une liaison de communication (101) et le deuxième système (201, 202) de mémoires tampons étant disposé entre la mémoire à messages (300) et une interface (203, 204) avec un processeur d'abonné (102),
**caractérisé en ce que**
- au moins une première machine (502, 503) à états finis qui commande l'accès à la mémoire à messages par l'intermédiaire du premier système (205, 206) de mémoires tampons est prévue dans le gestionnaire de messages (200),
- **en ce qu'**au moins une deuxième machine (501) à états finis qui commande l'accès par l'intermédiaire du deuxième système (201, 202) de mémoires tampons est prévue, la ou les premières machines à états finis et la deuxième machine à états finis établissant des demandes d'accès,
- **en ce qu'**une troisième machine (500) à états finis permet à la ou aux premières machines à états finis et à la deuxième machine à états finis d'accéder à la mémoire à messages en fonction de leurs demandes d'accès,
- **en ce qu'**il présente des moyens d'horloge par lesquels les données sont transmises à une période d'horloge (T) prédéterminée, la troisième machine (500) à états finis attribuant des périodes d'horloge (T1-T17) successives à chaque première machine (502, 503) à états finis et à la deuxième machine (501) à états finis en fonction de leurs demandes d'accès,
- **en ce qu'**il présente des moyens qui font attribuer par la troisième machine (500) à états finis une durée d'accès globale en fonction d'un nombre qui correspond au nombre simultané de demandes d'accès, seule une demande d'accès étant admissible à un moment donné pour chaque machine à états finis et
- **en ce qu'**il présente des moyens qui bloquent d'autres accès dans la première direction de transfert par le deuxième système (201, 202) de mémoires tampons jusqu'à la fin d'un transfert d'un objet de message dans une première direction de transfert entre le deuxième système (201, 202) de mémoires tampons et la mémoire à messages (300).

2. Module de communication (100) selon la revendication 1, **caractérisé en ce que** les données sont transmises par l'intermédiaire du premier système (205, 206) de mémoires tampons sur deux parcours de données qui présentent tous deux deux directions de données, le premier système (205, 206) de mémoires tampons contenant une première mémoire tampon (206) pour un premier parcours de données et une deuxième mémoire tampon (205) pour un deuxième parcours de données, et **en ce qu'**une première machine (502, 503) à états finis est prévue pour chaque parcours de données, chacune des deux premières machines à états finis commandant l'accès à la mémoire à messages par l'intermédiaire d'une mémoire tampon.

3. Procédé de commande d'accès à des données d'une mémoire à messages (300) d'un module de communication par un gestionnaire de messages (200), des données étant introduites ou délivrées dans la mémoire tampon (300) lors d'un accès,
la mémoire à messages (300) étant reliée à un premier système (205, 206) de mémoires tampons et à un deuxième système (201, 202) de mémoires tampons,
l'accès aux données s'effectuant par l'intermédiaire du premier ou du deuxième système de mémoires tampons,
le premier système (205, 206) de mémoires tampons étant disposé entre la mémoire à messages (300) et une interface (207, 208) avec une liaison de communication (101) et le deuxième système (201, 202) de mémoires tampons étant disposé entre la mémoire à messages (300) et une interface (203, 204) avec un processeur d'abonnés (102),
**caractérisé en ce que**
- une première machine à états finis du gestionnaire de messages (200) commande l'accès à la mémoire à messages par l'intermédiaire du premier système (205, 206) de mémoires tampons qui forme un premier parcours d'accès,
- **en ce qu'**une deuxième machine à états finis du gestionnaire de messages (200) commande l'accès à la mémoire à messages par l'intermédiaire du deuxième système (201, 202) de mémoires tampons qui forme un deuxième parcours d'accès, l'accès aux données à un instant donné ne pouvant s'effectuer que sur l'un des parcours d'accès,
- **en ce que** les données sont transmises à une période d'horloge (T) prédéterminée, la troisième machine (500) à états finis attribuant des périodes d'horloge (T1-T17) successives à chaque première machine (502, 503) à états finis et à la deuxième machine (501) à états finis en fonction de leurs demandes d'accès,
- **en ce qu'**une durée totale d'accès est attribuée par la troisième machine (500) à états finis en fonction d'un nombre qui correspond au nombre de demandes simultanées d'accès, une seule demande d'accès étant permise à un instant donné par la machine à états finis et
- **en ce qu'**il présente des moyens qui bloquent d'autres accès dans la première direction de transfert par le deuxième système (201, 202) de mémoires tampons jusqu'à la fin d'un transfert d'un objet de message dans une première direction de transfert entre le deuxième système (201, 202) de mémoires tampons et la mémoire à messages (300).

4. Procédé selon la revendication 3, **caractérisé en ce que** les données sont transmises par l'intermédiaire du premier système (205, 206) de mémoires tampons sur deux parcours de données qui présentent tous deux deux directions de données, le premier système (205, 206) de mémoires tampons contenant une première mémoire tampon (206) pour le premier parcours de données et une deuxième mémoire tampon (205) pour le deuxième parcours de données, et **en ce qu'**une première machine (502, 503) à états finis est prévue pour chaque parcours de données, chacune des deux premières machines à états finis commandant l'accès à la mémoire à messages par l'intermédiaire d'une mémoire tampon respective.
